(19)

Europäisches
Patentamt
European
Patent Office
Office européen
des brevets

(11) **EP 2 868 722 A1**

(12) **EUROPEAN PATENT APPLICATION**

(43) Date of publication:
**06.05.2015 Bulletin 2015/19**

(21) Application number: **13191460.8**

(22) Date of filing: **04.11.2013**

(51) Int Cl.:
***C09D 133/00*** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Axinnove SAS
92210 Saint-Cloud (FR)**

(72) Inventor: **Blavignac, Renaud
92210 Saint-Cloud (FR)**

(74) Representative: **Icosa
83 avenue Denfert-Rochereau
75014 Paris (FR)**

(54) **UV curable coating composition for antimicrobial coating**

(57)     The present invention relates to a composition for antimicrobial coating comprising an oligomer, a mixture of monomers, a curing agent, a photo-initiating agent, and an antimicrobial agent. The present invention further relates to an antimicrobial coating resulting from the curing of a composition of the invention. The invention also provides processes for manufacturing the composition and the coating of the invention.

EP 2 868 722 A1

**Description**

**FIELD OF INVENTION**

The present invention relates to the field of antimicrobial coatings. Especially, the invention relates to a coating obtained upon UV-curing of a composition applied onto a surface, said composition comprising an oligomer, a mixture of monomers, a curing agent, a photo-initiating agent and an antimicrobial agent. The invention further relates to said composition. The invention also provides a process for manufacturing the composition of the invention and a process for manufacturing a coating according to the invention.

**BACKGROUND OF INVENTION**

Contamination by microorganisms can have serious impact on human life and health. People are everyday confronted to a wide variety of surfaces which are contaminated with one or more microorganisms. Surfaces may be for example countertops, tables, food preparation, public facilities, door handle, floor, wall, game areas, display applications, various surfaces in healthcare settings. While a lot of the contaminating microorganisms are harmless, pathogenic ones may be at the origin of many diseases. Contamination of above surfaces by pathogenic microorganisms may thus results in the spread of diseases and infections to people, which endanger human lives and increases health care costs. Especially nosocomial infections and cross-contaminations may occur.

To avoid the spread of undesired microorganisms, contaminated surfaces are usually cleaned and sanitized, on a frequent basis. However, repeated cleaning is expensive, non-ecologic and most importantly, can be ineffective as bacteria doubling time can be as short as 20 minutes and some microorganisms survive the most thorough of cleanings. Moreover, microorganisms can be trapped in areas difficult to access and continue growing even after repeated cleaning.

This need for more efficient and durable means for reducing microbial contamination and development of biofilm has led to the development of antimicrobial coatings.

For example, paints comprising antimicrobial agents were provided. However, it was observed that the antimicrobial agents release from the coating layer at each cleaning, decreasing the antimicrobial activity. Different attempts were proposed to limit the release of the antimicrobial agents, for example by linking the antimicrobial agent via non-covalent bounds (ionic, electrostatic) to the coating layer.

Adhesive films comprising an antimicrobial layer were also provided (see for example WO2007/070650). However, the application of such adhesive films is not easy and not suitable for every type of surface.

Specific polymers were also developed, comprising antimicrobial moieties, to be included in paints or coatings (for example US2010/152708 or US 8,067,402).

Various coating composition were also provided, comprising an antimicrobial agent and curable matrix (for example WO99/33344).

In the present invention, it is intended to provide a coating composition and the corresponding coatings having the following properties:

- coating:

  o no release of the antimicrobial agent upon use;
  o good mechanical properties, especially a good adhesion of the coating to its support of the coating, resistance to abrasion, hardness, resistance to scratching and flexibility;
  ○ possibility that the aspect of the support is not modified upon application of the coating, especially by providing a very thin film;
  ○ resistance to water and to various chemicals;
  ○ suitable for every type of surface (material and shape);

- coating composition:

  ○ ease of application of the surface to be coated, especially by having a low viscosity so that it may be sprayed for example;
  ○ quick drying under UV-A light;
  ○ no volatile solvent release upon drying;
  ○ no odor.

Solutions of prior art display some of above properties, however, none of them meets all the requirements, contrary to the composition of the present invention.

The invention provides a composition comprising:

- an oligomer,
- a mixture of monomers, preferably acrylate monomers,
- a curing agent,
- a photo-initiating agent, and
- at least one antimicrobial agent.

According to the Applicant's understanding, components of the composition of the invention contribute positively to one or several of above requirements while having at the same time some negative impact on others. For example, the use of an oligomer enables to provide a composition with no odor, without inducing irritation upon application and providing a coating with UV resistance. However, the presence of the oligomer in the composition has a negative impact on its viscosity. To lower viscosity, monomers are used together with the oligomer. Depending on the number of reactive function on these monomers, reactivity upon curing is more or less affected. The choice of the mixture of monomers is thus important to incorporate very reactive monomers and much less reactive monomers. Very reactive monomers negatively impact the flexibility of the coating obtained upon curing of the composition, while much less reactive monomers require more important time of curing. Therefore, this is the specific association of all the components of the composition of the invention which ultimately enables to meet all above points.

**DEFINITIONS**

In the present invention, the following terms have the following meanings:

- **"Oligomer"** refers to a compound that consists of a few monomer units, in contrast to a polymer that, at least in principle, consists of a nearly unlimited number of monomers. Dimers, trimers, and tetramers are, for instance, oligomers respectively composed of two, three and four monomers.

- **"Monomer"** refers to a molecule which may bind chemically to other molecules to form a polymer.

- **"Curing agent"** refers to a compound which enables polymerization of monomers to form polymer chains. The curing agent may also enable cross-linking of polymer chains.

- **"UV-curing"** refers to polymerizing monomers and/or cross-linking polymeric chains, upon exposure to ultraviolet light.

- **"Photo-initiating agent"** refers to a substance that can produce radical species under illumination, preferably under ultraviolet light, and promote radical reactions.

- **"Antimicrobial agent"** refers to a substance that kill, inhibit the growth of, and/or prevent fouling by microorganisms including bacteria, yeast, fungi, mycoplasma, viruses or virus infected cells, and/or protozoa.

- **"Coating"** refers to a polymeric film which is applied onto a surface.

- **"About"**, preceding a figure means plus or less 10% of the value of said figure.

**DETAILED DESCRIPTION**

**1. Composition**

The present invention relates to a composition able to form an antimicrobial coating upon curing, preferably UV-curing, more preferably UV A-curing.
According to an embodiment, the composition of the invention comprises:

- an oligomer,
- a mixture of monomers, preferably acrylate monomers,
- a curing agent,
- a photo-initiating agent, and
- at least one antimicrobial agent.

In an embodiment of the invention, the composition comprises:

- an aliphatic urethane acrylate oligomer,
- a mixture of monomers comprising:

  ○ dipropylene glycol diacrylate,
  ○ tetrahydrofurfuryl acrylate,
  ○ 2,2,2-trifluoroethylmethacrylate,
  ○ dipentaerythriol pentaacrylate,

- pentaerythritol tetra-3-mercaptopropionate as curing agent,
- a photo-initiating agent, and
- at least one antimicrobial agent.

According to an embodiment, the composition of the invention comprises:

- 20% to 60% w/w of aliphatic urethane acrylate oligomer, in weight relative to the total weight of the composition,
- 5% to 30% w/w of dipropylene glycol diacrylate,
- 5% to 30% w/w of tetrahydrofurfuryl acrylate,
- 1% to 15% w/w of 2,2,2-trifluoroethylmethacrylate,
- 0.5% to 10% w/w of dipentaerythriol pentaacrylate,
- 1% to 25% w/w of pentaerythritol tetra-3-mercaptopropionate,
- 0.1% to 10% w/w of 2,4,6-trimethylbenzoyldiphenylphosphine oxide, and
- 0.1% to 10% of antimicrobial agent.

According to one embodiment, the mixture of monomers further comprises an ethoxylated acrylate monomer.

### 1.1. Oligomer

According to one embodiment, the composition of the invention comprises an aliphatic urethane acrylate oligomer. In a preferred embodiment, the oligomer comprises 3 acrylate functions. Preferably, the aliphatic urethane acrylate oligomer is CN922 or CN991 of Sartomer or a corresponding oligomer of another supplier.
In an embodiment, the aliphatic urethane acrylate oligomer of the invention is an aliphatic polyester based urethane diacrylate oligomer.
In one embodiment, the amount of aliphatic urethane acrylate oligomer in the composition of the invention ranges from 20% to 60% in weight relative to the total weight of the composition, preferably from 30% to 50% w/w, more preferably from 35% to 45% w/w, even more preferably about 40% w/w.

### 1.2. Monomers

In an embodiment of the invention, the composition comprises acrylate monomers. Advantageously, the composition comprises a mixture of monomers having various numbers of acrylate functions, preferably from 1 to 7 acrylate functions, more preferably 1, 2, 3, 4 or 5 acrylate functions.
In one embodiment, the composition of the invention comprises dipropylene glycol diacrylate (DPGA) monomer. This diacrylate enables diluting the composition of the invention while being reactive. According to an embodiment, the amount of DPGA in the composition of the invention ranges from 5% to 30% in weight relative to the total weight of the composition, preferably from 10% to 25% w/w, more preferably from 15% to 20% w/w, even more preferably about 17% w/w.
In one embodiment, the composition of the invention comprises tetrahydrofurfuryl acrylate (THFA) monomer. THFA has advantageously adhesive properties for plastic materials. According to an embodiment, the amount of THFA in the composition of the invention ranges from 5% to 30% in weight relative to the total weight of the composition, preferably from 7% to 25% w/w, more preferably from 10% to 20% w/w, even more preferably about 15% w/w.
In an embodiment, THFA may be partly replaced by an ethoxylated acrylate monomer so that the coating obtained by curing of the composition of the invention is more flexible.
According to an embodiment, the ethoxylated acrylate monomer is selected from ethoxylated trimethylolpropane triacrylate, preferably ethoxylated(20) trimethylolpropane triacrylate E(20)TMPTA, ethoxylated(03)trimethylolpropane triacrylate (E(03)TMPA) or ethoxylated tetrahydrofurfuryl acrylate.
In a preferred embodiment, the mixture of monomers of the composition of the invention further comprises an ethoxylated acrylate monomer, preferably ethoxylated(03)trimethylolpropane triacrylate.

According to one embodiment, the part of THFA replaced by ethoxylated acrylate monomer ranges from 10 to 90% in weight of the total weight of THFA, preferably from 30 to 70%, more preferably from 40 to 50%.

In an embodiment, the composition of the invention comprises THFA and an ethoxylated acrylate monomer wherein:

- the amount of THFA ranges from 0 to 30% in weight by weight of the total composition, preferably from 2 to 10% w/w, more preferably from 5 to 7% w/w,
- the amount of ethoxylated acrylate monomer ranges from 0 to 30% in weight by weight of the total composition, preferably from 2 to 10% w/w, more preferably from 5 to 8% w/w.

In one embodiment, the composition of the invention comprises 2,2,2-trifluoroethylmethacrylate (TFEMA) monomer. According to an embodiment, the amount of TFEMA in the composition of the invention ranges from 1% to 15% in weight relative to the total weight of the composition, preferably from 4% to 10% w/w, more preferably from 5% to 8% w/w, even more preferably about 7% w/w.

In one embodiment, the composition of the invention comprises dipentaerythriol pentaacrylate monomer. Advantageously, dipentaerythriol pentaacrylate improves surface hardness of coating obtained upon curing of the composition of the invention. According to an embodiment, the amount of dipentaerythriol pentaacrylate in the composition of the invention ranges from 0.5% to 10% in weight relative to the total weight of the composition, preferably from 1% to 7% w/w, more preferably from 2% to 6% w/w, even more preferably about 4% w/w.

### 1.3. Curing agent

According to an embodiment, the composition of the present invention comprises a curing agent. In a preferred embodiment of the invention, the curing agent is pentaerythritol tetra-3-mercaptopropionate (PETMP). Advantageously, PETMP improves surface drying, surface adhesion, flexibility and hardness of coating obtained upon curing of the composition of the invention.

PETMP is a tetra-functional compound usually used for coatings, adhesives, sealants and optical polymers due to the reducing properties of its thiol groups. Without willing to be linked by any theory, the applicant observed that this compound could be useful as curing agent in the composition of the invention.

According to an embodiment, the amount of curing agent, preferably PETMP, in the composition of the invention ranges from 1% to 25% in weight relative to the total weight of the composition, preferably from 5% to 20% w/w, more preferably from 10% to 15% w/w, even more preferably about 12% w/w.

### 1.4. Photo-intiating agent

According to an embodiment, the composition of the present invention comprises a photo-initiating agent. In a preferred embodiment of the invention, the photo-initiating agent is 2,4,6-trimethylbenzoyl-diphenyl-phosphine oxide (TPO).

According to an embodiment, the amount of photo-initiating agent, preferably TPO, in the composition of the invention ranges from 0.1% to 10% in weight relative to the total weight of the composition, preferably from 0.5% to 5% w/w, more preferably from 1% to 3% w/w, even more preferably about 2% w/w.

### 1.5. Antimicrobial agent

According to an embodiment, the composition of the present invention comprises an antimicrobial agent.

In one embodiment, the antimicrobial agent comprises silver, preferably ionic silver. Preferably, the antimicrobial agent is porous glass particles containing an antimicrobial silver additive. In an embodiment, the antimicrobial agent is a silver nanoparticle.

In a preferred embodiment, the antimicrobial agent comprising silver is a silver-zinc-aluminium-boronphosphonate glass (CAS 398477-47-9).

According to an embodiment, the amount of antimicrobial agent in the composition of the invention ranges from 0.1% to 10% in weight relative to the total weight of the composition, preferably from 0.5% to 5% w/w, more preferably from 1% to 3% w/w, even more preferably about 1.8% w/w.

### 1.6. Chlorine scavenging system

Sun et al. reported an N-halamine-based rechargeable antimicrobial polyurethane (Sun et al., Acta Biomater.,

2012, 8(4), 1498-1506). In this study, an N-halamine precursor, 5,5-dimethyl hydantoin (DMH) was covalently linked to a polyurethane with 1,6-hexamethylenediisocyanate (HDI) as coupling agent. After bleach treatment, the covalently bound DMH moieties were transformed into N-halamine and displayed antimicrobial properties. If the functions are lost due to prolonged used, they could be recharged by another chlorination treatment.

The Applicant applied this teaching to the composition of the invention to obtain a coating which is able to be charged with N-halamine function upon chlorination treatment leading to an additional antimicrobial effect with respect to that of the antimicrobial agent. The Applicant evidenced (see examples) that the association of the antimicrobial agent and of the chlorine scavenging system in the composition of the invention enables to beneficiate of the immediate effect of chlorine and then of the one of the antimicrobial agent when chlorine has discharged from the coating.

In one embodiment, the composition of the invention further comprises 5,5-dimethyl hydantoin (DMH) and 1,6-hexamethylene diisocyanate (HDI). Advantageously, the composition further comprises DMH, HDI and dibutyltindilaurate (DBTDL) as catalyst.

According to an embodiment, the amount of DMH in the composition of the invention ranges from 0.1% to 10% in weight relative to the total weight of the composition, preferably from 0.5 % to 5 % w/w, more preferably from 1% to 3% w/w, even more preferably about 2% w/w.

According to an embodiment, the amount of HDI in the composition of the invention ranges from 0.1% to 10% in weight relative to the total weight of the composition, preferably from 0.2% to 4% w/w, more preferably from 0.5% to 2% w/w, even more preferably about 1% w/w.

According to an embodiment, the amount of DBTDL in the composition of the invention ranges from 0.05% to 5% in weight relative to the total weight of the composition, preferably from 0.1% to 2% w/w, more preferably from 0.3% to 1% w/w, even more preferably about 0.5% w/w.

In a specific embodiment, the coating obtained upon curing of the composition of the invention is regularly washed with bleach.

*1.7. Additives*

According to one embodiment, the composition of the invention further comprises one or more additives selected from the group comprising matting agents, pigments, spreading agents, dispersing agents, stabilizers, or a mixture thereof.

Advantageously, the addition of additives in the composition of the invention does not modify properties of the coating obtained upon curing.

In an embodiment, the matting agent is selected from the group comprising polyethylene (PE) waxes, silicas, poly(methylmethacrylate) (PMMA) microspheres, polyurethane (PU) microspheres, Glass microspheres. The presence of matting agents in the composition of the invention enables to obtain a matte coating after curing.

In an embodiment, the pigment is selected from the group comprising any organic and inorganic pigments depending the tone or color desired.

In an embodiment, the spreading agent is selected from the group comprising defoamers, leveling agents, wetting agent.

In an embodiment, the stabilizer is selected from the group comprising the hindered phenols as IRGASTAB UV 22 from BASF.

In a preferred embodiment, the composition of the invention does not contain silicone.

In another preferred embodiment, the composition of the invention does not contain any solvent, especially any organic solvent. The composition of the invention presents the advantage to have a quantity of volatile organic compounds (VOC) inferior to 1% w/w.

In a specific embodiment of the invention, the composition does not comprise water.

*1.8. Properties or the composition of the invention*

According to an embodiment, the composition of the invention may be stored for at least 3 months, preferably for at least 6 months. Preferably, the composition is stored at room temperature and protected from light.

In one embodiment, the composition has a viscosity ranging from 50 to 150 cP, preferably from 70 to 130 cP, more preferably from 90 to 120 cP. Viscosity may be measured using a capillary viscometer.

In an embodiment, the dry extract of the composition of the invention is more than 90% w/w in weight by weight of the total composition, preferably more than 95% w/w, more preferably more than 99%. The "dry extract" corresponds to the ratio of the mass of the residue after heating at a test method (such as for example: 2 g sample heated for 3 h at 105 °C $\pm$ 2 °C), to the initial mass of the sample.

Preferably, the density of the composition of the invention is ranging from 1.02 to 1.20 g/cm$^3$ at 23°C, preferably from 1.10 to 1.15 g/cm$^3$.

## 2. Process for manufacturing the composition of the invention

The present invention further relates to a process for manufacturing a composition according to the invention.
In one embodiment, the process for manufacturing the composition of the invention comprises:

- step 1: stirring aliphatic urethane acrylate oligomer, dipropylene glycol diacrylate, tetrahydrofurfuryl acrylate and 2,2,2-trifluoroethylmethacrylate for a period of time ranging from 6 to 24 hours, preferably from 8 to 20 hours, more preferably from 10 to 18 hours, at a temperature ranging from room temperature to 50°C, preferably at room temperature,
- step 2: adding, at room temperature, pentaerythritol tetra-3-mercaptopropionate, dipentaerythriol pentaacrylate, photo-initiating agent and antimicrobial agent.

In the case wherein the composition of the invention comprises an ethoxylated acrylate monomer, it is preferably introduced in the mixture together with tetrahydrofurfuryl acrylate.
In the case wherein the composition of the invention comprises additives, it is preferably introduced in the mixture in the second step of the process of the invention.
In the case wherein the composition of the invention comprises DMH, HDI and DBTDL (chlorine scavenging system), the process of the present invention comprises a supplemental step (step 1') between step 1 and step 2 described above, comprising:

- dissolving DBTDL and HDI in the mixture of step 1;
- adding DMH and stirring the mixture for a period of time ranging from 1 to 8 hours, preferably from 3 to 4 hours at a temperature ranging from 30 to 50°C, preferably from 35 to 48°C, more preferably from 40 to 45°C;
- optionally filtering resulting mixture.

## 3. Coating and coated surface

The present invention also relates to a coating obtained upon curing of the composition of the invention. Preferably, curing of the composition of the invention is performed by UV-curing, more preferably by UV A-curing.
By "curing" it is referred to polymerization of the monomers present in the composition of the invention in presence of the curing agent and of the photo-initiating agent. "Curing" also includes cross-linking of polymer chains.
According to one embodiment, the coating of the invention is an acrylate polymer comprising at least one antimicrobial agent.
In a specific embodiment of the invention, the coating of the invention comprises DMH moieties, which are able to be transformed into N-halamine moieties upon bleach treatment.
According to an embodiment, the coating of the invention has a thickness ranging from 10 to 50 $\mu$m, preferably from 20 to 40 $\mu$m. Despite the weak thickness of the coating, it displays mechanical properties usually observed for thicker coatings, namely coatings with a thickness of 100-150$\mu$m.
Advantageously, the coating of the invention may coat various surfaces, including flexible, rigid, organic and inorganic surfaces. Especially, the coating of the invention has good adhesion properties for stainless steel, tile, glass, enamel, rigid plastic, painted surface, wood, paper, metal, cotton, fibers, and synthetic fibers. The coating of the invention may be applied on various surfaces such as walls, floors, working surfaces, kitchen elements or various objects such as door handle.
Especially, the coating of the invention may be useful in health care facilities for coating furniture, beds, decontamination rooms, trolleys, or surgical material; in the catering sector, especially in agri-food industry, canteen or kitchen; in public or private bathrooms.
The coating of the invention is water and stain resistant. It may therefore be used in bathrooms or kitchens.
Surfaces coated with the coating of the invention present the advantage to be repellent and need to be cleaned less often than a non-coated surface.
In one embodiment of the invention, the coating is invisible and very thin, not modifying the aspect of the surface or object where it is applied. In another embodiment, the coating is colored. Moreover, the coating may be mat, glossy or satiny, depending of additives present invention composition used to obtain the coating.
In another embodiment the coating of the invention is resistant to acids, bases, hydroalcoholic solutions, UV, and fire.
The invention further relates to a material comprising at least one surface coated with a coating according to the invention.
In one embodiment, the material is selected from the groups comprising stainless steel, tile, glass, enamel, rigid plastic, painted surface, wood, paper, metal, cotton, fibers, and synthetic fibers.

## 4. Process for manufacturing a coating of the invention

The present invention also relates to a process for manufacturing a coating according to the invention.

According to an embodiment, the process for manufacturing a coating of the invention comprises:

- applying a composition according to the invention onto a surface;
- curing the composition to form the coating, preferably upon UV exposure, more preferably upon UV A exposure.

Preferably, the composition is applied onto the surface using an airless spray gun, a paint roller, a brush. In a preferred embodiment, the composition is applied using an airless spray gun. Especially, the airless spray gun may be a Graco Airless Spray Gun, an AIRMIX® GUN or an HVLP spray gun.

In a preferred embodiment, the process for manufacturing the coating of the invention comprises:

- applying a composition according to the invention onto a surface, preferably using an airless spray gun, a paint roller or a brush;
- curing the composition to form the coating, preferably upon UV exposure, more preferably upon UV A exposure.

Advantageously, the composition is applied on the surface having a temperature ranging from 1°C to 40°C, preferably from 10°C to 30°C. Moreover, the relative ambient humidity during application of the composition on the surface is preferably below 80%.

In one embodiment of the invention, the surface on which the composition is applied is preliminarily dried and cleaned. Especially, the surface to be coated does not present any trace of oil or grease, which could affect adhesion.

In an alternative embodiment, the surface on which the composition is applied is directly used, without preliminary drying and cleaning.

In an embodiment, the composition applied on the surface is cured, preferably by radical polymerization initiated by UV exposure, more preferably by radical polymerization initiated by UV A exposure.

In a preferred embodiment, curing is initiated by UV A exposure. Advantageously, wave lengths of UV radiations are ranging from 300 to 450 nm, preferably from 350 to 405 nm, more preferably from 395 to 405 nm. According to a very preferred embodiment, wave length of UV radiation is equal to 395 nm.

According to one embodiment of the invention, curing is performed using a system emitting UV waves (i.e. a UV-curing system), preferably a UV lamp.

In an embodiment, curing is completed upon UV exposure for a period of time ranging from 0.1 second to 5 seconds, preferably from 0.1 to 1 second.

In an embodiment, curing occurs under a dose of UV A radiation of at least 300 mJ/cm$^2$.

Preferably, coated surface may be used immediately after curing. Advantageously, hardening of the coating is at least of 95% just after curing. Complete hardening of the coating is obtained in 24 hours.

In a preferred embodiment, the composition of the invention is applied in a single layer on the surface to be coated.

Advantageously, a coating of the invention may be applied on a surface already coated with a coating according to the invention. The first coating does not need to be removed before applying the second layer of coating.

The invention also relates to a kit comprising the composition according to the present invention and a UV-curing system.

According to one embodiment, the kit further comprises a spray gun for application.

## BRIEF DESCRIPTION OF THE DRAWINGS

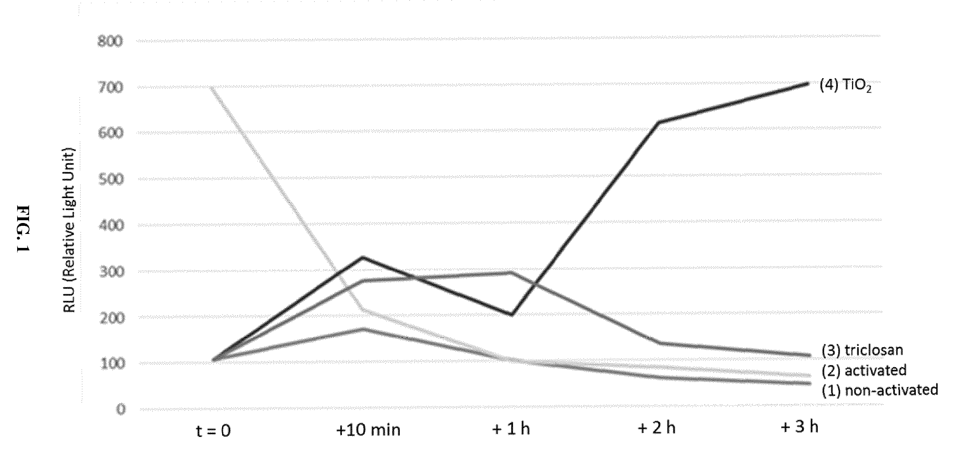

   **Figure 1** is a graph showing a comparative test of antimicrobial properties of various coated surfaces.

## EXAMPLES

The present invention is further illustrated by the following examples.

Example 1: UV curable composition

*Material*

The aliphatic urethane acrylate oligomer (CN991 or CN922), the dipropylene glycol diacrylate (SR508), the dipentaerythritol pentaacrylate (SR-399), the tetrahydrofurfuryl acrylate (SR-285), the ethoxylated(20) trimethylolpropane triacrylate (SR415) or ethoxylated(03) trimethylolpropane triacrylate (SR45HP) were purchased from Sartomer. The 2,2,2-trifluoroethyl methacrylate was obtained from Fluorester-Tosoh. The pentaerythritol tetra(3-marcaptopropionate) was purchased from Bruno Bock. The 2,4,6-trimethylbenzoyldiphenylphosphine oxide (Lucirin TPO) was obtained from BASF. The silver-zinc-aluminium-boronphosphonate glass was purchased from Steritouch. Additives were purchased from Byk. Dibuthyltindilaurate, 1,6-hexamethylene diisocyanate and 5,5-dimethyl hydantoin were purchased from Sigma Aldrich.

*Composition*

Amounts are given in weight percent relative to the total weight of the composition.

| Type | Component | Composition 1 | Composition 2 | Composition 3 |
|---|---|---|---|---|
| Oligomer | aliphatic urethane acrylate | 40% | 40% | 36.5% |
| Monomers | dipropylene glycol diacrylate (DPGDA) | 17% | 17% | 17% |
| | dipentaerythritol pentaacrylate | 4% | 4% | 4% |
| | tetrahydrofurfuryl acrylate (THFA) | 15% | 7% | 7% |
| | ethoxylated(03) trimethylolpropane triacrylate (E(03) TMPTA) | \ | 8% | 8% |
| | 2,2,2-trifluoroethyl methacrylate (TFEMA) | 7% | 7% | 7% |
| Curing agent | pentaerythritol tetra(3-marcaptopropionate) (PETMP) | 12% | 12% | 12% |
| Photo-initiating agent | 2,4,6-trimethylbenzoyldiphenylphosphine oxide (TPO) | 2% | 2% | 2% |
| Antimicrobial agent | silver-zinc-aluminium-boronphosphonate glass (CAS 398477-47-9) | 1.8% | 1.8% | 1.8% |
| Additives | BYK UV 3575 (leveling) BYK 1790 (defoamer) | 1.2% | 1.2% | 1.2% |
| Chlorable system | dibuthyltindilaurate (DBTDL) | \ | \ | 0.5 % |
| | 1,6-hexamethylene diisocyanate (HDI) | \ | \ | 1% |
| | 5,5-dimethyl hydantoin (DMH) | \ | \ | 2% |

*Process of manufacturing*

Above compositions were manufactured using the following process:

Aliphatic urethane acrylate oligomer is stirred overnight at room temperature with DPGDA, THFA, TFEMA and optionally E(03) TMPTA.

When applicable, DBTDL and HDI are added. After dissolution, DMH is added and the mixture is stirred for 3-4 hours at 40-45°C. The resulting mixture may be filtered with a 10 $\mu$m filter.

Pentaerythritol tetra-3-mercaptopropionate, dipentaerythriol pentaacrylate, 2,4,6-trimethylbenzoyldiphenylphosphine oxide and silver-zinc-aluminium-boronphosphonate glass are then added at room temperature.

Example 2: Process of coating

Above compositions were used to coat surfaces. Especially, the composition of the invention is sprayed on a surface (e.g., painted wall, tiles, wood,...) using an airless gun. The coated surface is then exposed to UV radiation, using a UV-lamp having wave lengths ranging from 385 to 405 nm. Exposure is maintained for the required time depending of the power of the lamp/led.

Example 3: Antimicrobial properties of coated surfaces against *Pseudomonas aeruginosa*

Polyethylene (PE) white films coated with composition 3 of example 1 were evaluated for their antimicrobial properties.

Tests were performed according to methodology of ISO 22196 (August 2011) standards. Antibacterial activity was measured against *Pseudomonas aeruginosa.*

*Material*

- **Samples:** squares of 50 mm x 50 mm of coated surfaces (polyethylene (PE) white film).

- **Negative controls:** squares of 50 mm x 50 mm cut from sterile Stomacher bag.

- **Bacterial strains:** they were maintained and controlled according to NF EN 12353 (June 2013) standard: *Pseudomonas aeruginosa* (CIP 103.467).

- **Broth for the preparation of inoculum:** A mixture of 3.0 g of meat extract, 10.0 g of peptone, 5.0 g of sodium chloride and 1000 ml of distilled water was diluted 1/500. The pH was comprised between 6.8 and 7.2 at 20°C. The broth was sterilized 15 min at 122°C.

- **SCDLP broth for recovery of surfaces:** (SCDLP broth stands for "Soybean Casein Lecithin Polysorbate 80 Medium"). 17.0 g of casein peptone, 3.0 g of soybean peptone, 5.0 g of sodium chloride, 2.5 g of disodium hydrogenophosphate, 2.5 g of glucose, 1.0 g of lecithin, 1000 ml of distilled water. The pH was comprised between 6.8 and 7.2 at 20°C. The broth was sterilized 15 min at 122°C.

- **Agar counting medium:** Trypton Soja Agar made of 15 g casein peptone, 5.0 g of soybean peptone, 5.0 g of sodium chloride, 15.0 g of agar, 1000 ml of distilled water. The pH was comprised between 7.1 and 7.5 at 20°C. The medium was sterilized 15 min at 122°C.

- **Diluent for bacterial counting:** physiological water made of 8.5 g of sodium chloride and 1000 ml of distilled water. The diluent was sterilized 15 min at 122°C.

*Method*

An inoculum is prepared comprising between 2.5 and 10.0 x $10^5$ CFU/ml (CFU: colony-forming unit) of tested bacteria.

400 $\mu$l of inoculum are placed on each sample and negative control. The inoculum is then covered by a square (40 mm x 40 mm) cut from a sterile stomacher bag. This square is carefully pressed so that the inoculum is in contact with the totality of the bag. Tests are performed in triplicate and with 6 negative controls.

Surviving bacteria are immediately counted on 3 negative controls ($U_0$).

Remaning samples and controls are incubated at 37°C, with relative humidity above 90%, for 24 hours.

Surviving bacteria are then counted on the 3 remaining controls ($U_t$) and samples (At).

*Method validity*

The mean value of $U_0$ should be comprised between 6.2 x $10^3$ and 2.5 x $10^4$ CFU/cm$^2$ (3.80 to 4.40 log).

Mean value of $U_t$ should be at least 6.2 x $10^2$ CFU/cm$^2$ (1.80 log).

The value of [log ($U_0$ max) - log ($U_0$ min)]/[log ($U_0$ mean)] should be less than 0.2.

*Results*

1) <u>countings</u>

$$\text{Inoculum counting} = 7.5 \times 10^5 \text{ CFU/ml}$$

| Dilutions | Average of counting of bacteria strains per dilution | | | | | | | | |
|---|---|---|---|---|---|---|---|---|---|
| | Counting of controls | | | | | | Counting of samples | | |
| | $U_0$ (t = 0) | | | $U_t$ (t = 24 h) | | | $A_t$ (t = 24h) | | |
| | C1 | C2 | C3 | C4 | C5 | C6 | S1 | S2 | S3 |
| 1 ml dilution $10^{-4}$ | *NA* | *NA* | *NA* | 94 | 109 | 69 | 0 | 0 | 27 |
| 1 ml dilution $10^{-3}$ | 23.5 | 19.5 | 20 | + | + | + | 0 | 0 | 0 |
| 1 ml dilution $10^{-2}$ | 189 | 162 | 181 | + | + | + | 0 | 0 | 0 |
| 1 ml dilution $10^{-1}$ | + | + | + | + | + | + | 0 | 0 | 0 |
| 1 ml dilution $10^{0}$ | + | + | + | + | + | + | 0 | 0 | 0 |
| C = Control, ,S = Sample, *NA:* non-avauable | | | | | | | | | |

2) <u>antimicrobial activity</u>

The antimicrobial activity (R) corresponds to:

$$R = [\log(U_t \text{ mean}) - \log(U_0 \text{ mean})] - [\log(A_t \text{ mean}) - \log(U_0 \text{ mean})]$$

$$R = \log(U_t \text{ mean}) - \log(A_t \text{ mean})$$

| Log $U_0$ (CFU/cm$^2$) (mean of 3 controls) | Log $U_t$ (CFU/cm$^2$) (mean of 3 controls) | Log $A_t$ (CFU/cm$^2$) (mean of 3 samples) | R |
|---|---|---|---|
| 4.04 | 5.75 | 1.09 | 4.66 log |

Therefore, the surface coated by the composition of the present invention enables decreasing the bacterial population of *Pseudomonas aeruginosa* of 4.66 log, i.e. 99.998%, compared to a negative control, after 24h of contact with the bacteria.

<u>Example 4:</u> Antimicrobial properties of coated surfaces against *Methicillin-resistant Staphylococcus aureus (MRSA)*

The same method as in example 3 was used to determine the antimicrobial properties of coated compositions according to the invention against *Methicillin-resistant Staphylococcus aureus (MRSA)*.

*Results*

1) <u>counting</u>

| Sample | CFU at 0 hrs | CFU at 24 hrs | Decrease of bacteria number |
|---|---|---|---|
| Control | $U_0 = 260000$ | $U_t = 110000$ | 58% |
| Sample 1 | \ | $A_t = 20$ | 99.99% |

2) antimicrobial activity

| Log $U_0$ | Log $U_t$ | Log $A_t$ | R |
|---|---|---|---|
| 5.41 | 5.04 | 1.30 | 3.74 log |

Therefore, the surface coated by the composition of the present invention enables decreasing the bacterial population of *MRSA* of 3.74 log, i.e. 99.99%, compared to a negative control, after 24h of contact with the bacteria.

Example 5: Antimicrobial properties of coated surfaces with composition 3 against *E. coli* determined by ATP measure

Surfaces coated with composition 3 of example 1 were tested against E. coli, either directly or after activation using bleach.

*Material*

-    **Samples:** petri dishes coated with composition 3 of the example 1.

        Sample 1: non-activated coating.
        Sample 2: coating activated by bleach treatment.

-    **Negative control:** non-coated petri dish.
-    **Bacterial strains:** *E. coli.*

*Method*

An inoculum of *E. coli* is prepared comprising $10^4$ CFU/cm$^2$ (CFU: colony-forming unit) of tested bacteria. 144 µl of the inoculum is placed on the 2 samples and on the negative control surfaces and covered by a glass slices:

Petri dishes are incubated at 35°C, with relative humidity of 80%, for 1 hour. The glass slice of each sample is then removed and the number of living bacteria is by classical ATP-test: the amount of ATP is determined by luminescence measurement (Ensure apparatus). The number of bacteria is proportional to the relative light unit (RLU).

*Results*

|  | Inoculum before incubation | Negative control | Sample 1 ("non activated") | Sample 2 ("activated") |
|---|---|---|---|---|
| **RLU** | 641 | 835 | 407 | 0 |

Using "non-activated" coating of the invention, proliferation of bacteria is decreased. Upon activation, bacteria are eliminated quasi instantaneously from the surface and antibacterial action is renewable by washings of the surface using bleach.

Example 6: Comparative analysis of antimicrobial properties of surfaces coated with a composition comprising DBTDL/HDI/DMH

Antimicrobial properties of activated or non-activated surfaces coated with composition 3 of example 1 were compared to properties of other surfaces.

*Samples*

- Sample (1) "non activated": surface coated with composition 3 of the example 1, wherein the coating is not activated.
- Sample (2) "2 activated": surface coated with composition 3 of the example 1, wherein the coating is activated by bleach washing.
- Sample (3) "triclosan": surface coated with an adhesive film comprising triclosan.
- Sample (4) "$TiO_2$": tiles/$TiO_2$ nanoparticles.

*Method*

An inoculum of E. Coli is prepared. The number of bacteria at t = 0 is evaluated by ATP measurement using bioluminescence test. Please note that in the case of sample (2), the inoculum used for the test comprises a much higher amount of bacteria than for the three other samples. This has no impact on the test, since only trends overtime are compared.

The inoculum is deposited on samples, which are then incubated at 35°C, with relative humidity of 80%. The amount of living bacteria is measured overtime by ATP measurements.

*Results*

Antimicrobial properties of surfaces coated with composition 3 of example 1 were evaluated against E-Coli (samples (1) and (2)). The coating obtained from composition 3 comprises a DBTDL/HDI/DMH system which is capable of sequestering free chlorine contained in a solution of bleach, as it is the case of sample (2). This chlorine is directly available on the surface of the coating for an immediate anti-bacterial action, while other anti-bacterial agents (such as silver - sample (1), $TiO_2$ nanoparticles - sample (4) or triclosan - sample (3)) have a period of "latency" to achieve a satisfying level of efficiency. In the absence of chlorine, a coating comprising the DBTDL/HDI/DMH system (i.e. no other antibacterial agent) only has no anti-bacterial activity (sample (1)).

Results depicted on figure 1 show that silver (sample (1)), $TiO_2$ nanoparticles (sample (4)) and triclosan (sample (3)) do not stop immediately bacterial proliferation, which go on for at least the 10 first minutes. On the contrary, for activated sample (2), chloration of the coating enables to immediately stop proliferation.

Except for sample (4), the amount of living bacteria is then decreased overtime. The best results are obtained with samples (1) and (2) comprising the coating according to the invention.

Example 7: Physicochemical properties of coated surfaces

Physicochemical properties of surfaces coated with composition of the invention were evaluated.

**Mechanical properties**

- Resistance to elongation: reflects the ability of the coating to follow dimensional variations of the support on which it is applied. An elongation rate of more than up to 200% was measured.

- Resistance to abrasion: reflect the ability of the coating to resist to friction, which is especially important when the coating is used on floors. Pencil test is >6H, preferably >9H (Wolf-Wilburn Pencil Hardness Tester, according ISO15184).

- Adhesion: on any support tested (paint, plastic, steel, aluminum...), the coating resists to Scotch test. Cross hatch test: class 0-1. According ISO2409.

- Flexibility: it is evaluated by measuring the minimum bend radius without cracking. The coating of the invention has a minimum bend radius (depending on its thickness) ranging from a few hundredths of a millimeter to a few millimeters (ISO 6819,6860).

**Chemical resistance**

The resistance of the coating was tested to various chemicals. Especially strong and weak acids, strong and weak bases, water and solvents such as acetone or DMSO were applied on surfaces coated by UV-curing of the composition of the invention. All tests showed no effects on the coating after 24 hours.

Resistance to water: water does not have effect on the coating.

Permeability to water vapor: it was tested according to ASTM D1653-03 and give good results: $+/-4 grs/m^2/day/100\mu$.

**Stain resistance**

Stain resistance of the coating was tested by applying ketchup, wine, mustard, vinegar, oil, soya, curry, lipstick, permanent marker and spray paint on coated surfaces. No stain remained on coated surfaces after washing.

**Claims**

1. Composition comprising :

  - an aliphatic urethane acrylate oligomer,
  - a mixture of monomers comprising:

    ○ dipropylene glycol diacrylate,
    ○ tetrahydrofurfuryl acrylate,
    ○ 2,2,2-trifluoroethylmethacrylate,
    ○ dipentaerythriol pentaacrylate,

  - pentaerythritol tetra-3-mercaptopropionate as curing agent,
  - a photo-initiating agent, and
  - at least one antimicrobial agent.

2. Composition according to claim **1**, wherein the mixture of monomers further comprises an ethoxylated acrylate monomer, preferably ethoxylated(03)trimethylolpropane triacrylate.

3. Composition according to claim **1** or claim **2**, wherein the photo-initiating agent is 2,4,6-trimethylbenzoyldiphenylphosphine oxide.

4. Composition according to anyone of claims **1** to **3**, wherein the antimicrobial agent comprises silver, preferably the antimicrobial agent is silver-zinc-aluminium-boronphosphonate glass.

5. Composition according to anyone of claims **1** to **4**, further comprising dibutyltindilaurate, 1,6-hexamethylene diisocyanate and 5,5-dimethyl hydantoin.

6. Composition according to anyone of claims **1** to **5**, further comprising at least one additive selected from the group comprising matting agents, pigments, spreading agents, dispersing agents, stabilizers, or a mixture thereof.

7. Composition according to anyone of claims **1** to **6**, comprising:

  - 20% to 60% w/w of aliphatic urethane acrylate oligomer, in weight relative to the total weight of the composition,
  - 5% to 30% w/w of dipropylene glycol diacrylate,
  - 5% to 30% w/w of tetrahydrofurfuryl acrylate,
  - 1% to 15% w/w of 2,2,2-trifluoroethylmethacrylate,
  - 0.5% to 10% w/w of dipentaerythriol pentaacrylate,
  - 1% to 25% w/w of pentaerythritol tetra-3-mercaptopropionate,

- 0.1% to 10% w/w of 2,4,6-trimethylbenzoyldiphenylphosphine oxide, and
- 0.1% to 10% of antimicrobial agent.

8. Coating resulting from the curing of a composition according to anyone of claims **1** to **7**.

9. Material comprising at least one surface coated with a coating according to claim **8**.

10. Process for manufacturing a composition according to anyone of claims **1** to **7**, comprising:

- stirring aliphatic urethane acrylate oligomer, dipropylene glycol diacrylate, tetrahydrofurfuryl acrylate and 2,2,2-trifluoroethylmethacrylate, at a temperature ranging from room temperature to 50°C, for a period of time ranging from 6 to 24 hours,
- adding, at room temperature, pentaerythritol tetra-3-mercaptopropionate, dipentaerythriol pentaacrylate, photo-initiating agent and antimicrobial agent.

11. Process for manufacturing a coating according to claim **8**, comprising:

- applying a composition according to anyone of claims **1** to **7** onto a surface, preferably using an airless spray gun, a paint roller or a brush;
- curing the composition to form the coating, preferably upon UV exposure, more preferably upon UV A exposure.

12. A kit comprising a composition according to anyone of claims **1** to **7**, and a UV-curing system.

**FIG. 1**

Europäisches
Patentamt

European
Patent Office

Office européen
des brevets

**EUROPEAN SEARCH REPORT**

Application Number

EP 13 19 1460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 62 227786 A (TOYO INK MFG. CO., LTD.) 6 October 1987 (1987-10-06) ----- | 1-12 | INV. C09D133/00 |

|  |
|---|
| TECHNICAL FIELDS SEARCHED (IPC) |
| C09D |

The present search report has been drawn up for all claims

| Place of search | Date of completion of the search | Examiner |
|---|---|---|
| Munich | 17 January 2014 | Rouault, Yannick |

EPO FORM 1503 03.82 (P04C01)

## ANNEX TO THE EUROPEAN SEARCH REPORT
## ON EUROPEAN PATENT APPLICATION NO.

EP 13 19 1460

This annex lists the patent family members relating to the patent documents cited in  the above-mentioned European search report.
The members are as contained in the European Patent Office EDP file on
The European Patent Office is in no way liable for these particulars which are merely given for the purpose of information.

17-01-2014

| Patent document cited in search report | Publication date | Patent family member(s) | Publication date |
|---|---|---|---|
| JP 62227786 A | 06-10-1987 | --------- | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007070650 A
- US 2010152708 A
- US 8067402 B
- WO 9933344 A

**Non-patent literature cited in the description**

- **SUN et al.** *Acta Biomater.,* 2012, vol. 8 (4), 1498-1506